(19) Europäisches Patentamt
European Patent Office
Office européen des brevets

(11) **EP 3 009 860 B1**

(12) **EUROPEAN PATENT SPECIFICATION**

(45) Date of publication and mention
of the grant of the patent:
**18.12.2019 Bulletin 2019/51**

(51) Int Cl.:
**G01S 19/39** (2010.01)

(21) Application number: **14189240.6**

(22) Date of filing: **16.10.2014**

(54) **Method for computing an error bound of a Kalman filter based GNSS position solution**

Verfahren zur Berechnung einer Fehlergrenze auf einer GNSS-Positions-Lösung auf Kalman-Filter-Basis

Procédé de calcul d'une erreur liée d'un filtre de Kalman à base de solution de position GNSS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.04.2016 Bulletin 2016/16**

(73) Proprietor: **GMV Aerospace and Defence S.A. Tres Cantos, 28760 Madrid (ES)**

(72) Inventor: **Navarro Madrid, Pedro Francisco 28760 Tres Cantos - Madrid (ES)**

(74) Representative: **Stiebe, Lars Magnus et al Balder Paseo de la Castellana 93, 5 28046 Madrid (ES)**

(56) References cited:
**EP-A1- 2 113 786     US-A1- 2002 120 400 US-B1- 7 219 013**

- JASON RIFE ET AL: "Paired overbounding for nonideal LAAS and WAAS error distributions", IEEE TRANSACTIONS ON AEROSPACE AND ELECTRONIC SYSTEMS, IEEE SERVICE CENTER, PISCATAWAY, NJ, US, vol. 42, no. 4, 1 October 2006 (2006-10-01), pages 1386-1395, XP011168606, ISSN: 0018-9251, DOI: 10.1109/TAES.2006.314579

- TMAZIRTE NOURDINE AIT ET AL: "Fast multi fault detection & exclusion approach for GNSS integrity monitoring", 17TH INTERNATIONAL CONFERENCE ON INFORMATION FUSION (FUSION), INTERNATIONAL SOCIETY OF INFORMATION FUSION, 7 July 2014 (2014-07-07), pages 1-6, XP032653837, [retrieved on 2014-10-03]

- HAIYING LIU ET AL: "Research on integrity monitoring for integrated GNSS/SINS system", INFORMATION AND AUTOMATION (ICIA), 2010 IEEE INTERNATIONAL CONFERENCE ON, IEEE, PISCATAWAY, NJ, USA, 20 June 2010 (2010-06-20), pages 1990-1995, XP031709627, ISBN: 978-1-4244-5701-4

- QIAN SUN ET AL: "RAIM method for improvement on GNSS reliability and integrity", DIGITAL AVIONICS SYSTEMS CONFERENCE, 2009. DASC '09. IEEE/AIAA 28TH, IEEE, PISCATAWAY, NJ, USA, 23 October 2009 (2009-10-23), pages 7.D.3-1, XP031575838, ISBN: 978-1-4244-4078-8

- ANUP DHITAL ET AL: "A New Approach for Improving Reliability of Personal Navigation Devices under Harsh GNSS Signal Conditions", SENSORS, vol. 13, no. 11, 7 November 2013 (2013-11-07), pages 15221-15241, XP055179937, ISSN: 1424-8220, DOI: 10.3390/s131115221

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

*Field of the Invention*

The present invention arose in the field of satellite-based navigation (or GNSS), but it is applicable in many fields in which Kalman filtering is used. The invention gives response to the need for reliable bounds to the position and velocity errors in a variety of applications of GNSS navigation, ranging from civil aviation to electronic (road) fee collection, among others.

*Background of the Invention*

The GNSS navigation problem is the problem of estimating the position of a GNSS user by means of the information provided by the GNSS signal as received by a GNSS user receiver.

There are several standard GNSS navigation techniques, the most common of which is absolute navigation. In absolute navigation, the navigation system computes its absolute position and velocity with no more information than that contained in the GNSS satellite signals tracked by the user's receiver, by means of so-called pseudo-range and Doppler measurements. For that purpose, in order to be able to obtain its position some additional parameters must be estimated, as the receiver clock bias and drift. If more than one satellite constellation is processed (e.g. GPS + GLONASS), it is also necessary to add an inter-system bias that accounts for the different synchronization of the satellite clocks. Position, velocity and the auxiliary parameters are simultaneously estimated in a common Kalman filter.

GNSS navigation can also profit from the use of the data from an inertial measurement unit, or IMU, which usually consists of a 3-axis accelerometer and a 3-axis gyroscope. The GNSS+IMU tightly coupled Kalman filter substitutes the propagation model of the GNSS-only Kalman filter by a mechanization stage, which uses the data from the IMU to predict the filter state throughout the time period between successive GNSS data epochs. This hybrid filter requires the inclusion of new parameters in the Kalman state vector, namely, the accelerometer and gyro biases, plus the attitude matrix variables.

Finally, it is possible to perform absolute navigation with centimetre-level errors by using a technique called PPP (Precise Point Positioning). PPP processes pseudorange and carrier-phase measurements from a single user receiver, using detailed physical models and corrections, and requires precise satellite orbits and clocks products (e.g. through real-time corrections to the navigation message). PPP is different from other precise-positioning approaches like RTK in that no reference stations are needed in the vicinity of the user receiver.

The only observation data that must be processed are measurements from the user receiver. In terms of the Kalman filter, the main difference of PPP with respect to the standard GNSS navigation is that a carrier-phase ambiguity parameter must be estimated for each satellite.

The present invention is applicable in the GNSS standalone, GNSS+IMU and PPP cases.

For many applications of GNSS navigation a certain level of accuracy is not enough. In addition, the system must also provide reliability. For instance, in a tolling system users should always be charged for all and only the toll roads they use (no more, no less). In other fields of application, as aviation, the consequences of getting a wrong position beyond certain limits and not being aware of it are much more dramatic. This can be solved, in the case of a GNSS-based system, by adding a method of navigational integrity. Integrity provides the necessary guarantee that users are where they are supposed to be (i.e. where the navigation system says they are). A system can preserve integrity and at the same time be inaccurate, as long as the system itself is aware of the lack of accuracy. In such a case, the problem is that the system may be unavailable more often than desired. A perfect system (from the point of view of its reliability) would exhibit 100% availability and 100% integrity. Unfortunately, perfect systems do not exist, and in practice there is always a trade-off between both goals.

Many methods of integrity use the concept of Protection Level (PL), which intends to provide bounds to the GNSS positioning errors up to certain level of confidence. For instance, for a given confidence level 1 - $\alpha$, a valid Protection Level is a positive number $B$ such that:

$$P(|\delta| > B) < \alpha$$

where $P$ is the probability operator and $|\delta|$ is the norm of the position error. Usual values of the confidence level range from $10^{-4}$ to $10^{-7}$, and depend on the requirements of the GNSS application. For instance, $\alpha = 10^{-7}$ appears frequently in the aviation context. Note that there are many possible values that fulfil the Protection Level condition, but it is important that the method provides fairly small ones, so that the availability is not degraded. In the case of GNSS navigation, the concept of error bound is usually particularized to a subset of the position coordinates, especially the vertical component $\delta_U$ (e.g. civil aviation) or the horizontal ones, in the North and East directions ($\delta_E$, $\delta_N$), (e.g. electronic road fee collection).

This concept of Protection Level arose as the core of the GNSS Integrity concept that was developed for Satellite Based Augmentation Systems (SBAS), such as the American WAAS or the European EGNOS among others, and has been applied specifically to those systems as well as to Ground Base Augmentation Systems (GBAS) such as LAAS. Both SBAS and GBAS are systems that provide real time corrections and integrity information applicable to GNSS observations. Civil aircrafts equipped with special GNSS navigation units can receive those corrections and apply them to their GNSS observations, as well as the integrity information, in the form of statistical bounds to the observation errors that remain after applying the corrections. Thus the on-board GNSS unit can achieve a more accurate estimate of its position (thanks to corrections) and, moreover, can compute a Protection Level for the remaining position error.

Besides, autonomous methods for computing a Protection Level have been defined in the frame of the so-called RAIM methods (Receiver Autonomous Integrity Monitoring). By autonomous it is meant that they do not depend on corrections or any extra information coming from an augmentation system such as a SBAS or a GBAS. The RAIM concept aims to provide an integrity layer to the GNSS navigation process, implementing techniques for detecting and isolating faulty measurements (that is, measurements with excessive error) along with the mentioned Protection Levels for statistically bounding the position estimation error. Such PL computation methods are, however, difficult to justify from a theoretical point of view, since they rely on hypotheses that rarely hold in real world.

Patent document EP2113786 discloses an autonomous method to provide Protection Levels for GNSS positioning based on navigation residuals, which does not make any hypothesis about the statistical behaviour of the errors of the individual measurements, but it is based on only one hypothesis (isotropy) that such measurement errors combine in an error vector which can point in any direction (of the measurement space) with the same probability.

All the methods to compute Protection Levels that have been mentioned above only apply to the least-squares estimation. A method to compute Protection Levels for a Kalman solution faces new requirements:

- The filter makes use of different types of measurements (e.g. pseudoranges, Doppler and carrier-phase measurements in the GNSS case).
- The filter combines observations from different epochs, giving more weight to the most recent ones. In addition, the measurement noise is not white noise, as the Kalman filter usually assumes. Instead, measurements performed in successive epochs show a temporal correlation (coloured noise) that may have an important (negative) impact in the accuracy of the Kalman solution. So, it is crucial that the method to compute the Protection Levels takes into account the effects of temporal correlations.
- The Kalman solution has errors coming from the propagation of the solution between different updates, which should also be quantified.
- The size of the Kalman state vector may become quite big, but usually only a few of the estimated parameters are interesting.

*Multivariate t-distributions* can be used to model different error distributions. The family is parameterized by a scalar $N_m$, which is called the *number of degrees of freedom*, and a covariance matrix $R_m$, which gives an estimation of the size of the errors. Thus, the distribution of an error vector $\theta$ of dimension d reads:

$$\theta \sim \mathcal{T}_d(N_m, R_m) = \frac{\Gamma[(n+d)/2]}{\Gamma(n/2)N_m^{d/2}\pi^{d/2}|R_m|^{1/2}} \cdot \left[1 + \frac{1}{N_m}\theta^T R_m^{-1}\theta\right]^{-(N_m+d)/2} \qquad \text{[Eq. 1]}$$

The t-distribution is heavy tailed and it provides a more realistic representation of the measurement and navigation errors than the normal distribution. It has been used in order to improve the robustness of navigation filters against outliers. It provides a good model for the measurement errors, which is used in a Bayesian framework (see, for instance, "A New Approach for Improving Reliability of Personal Navigation Devices under Harsh GNSS Signal Conditions", Anup Dhital, Jared B. Bancroft and Gerard Lachapelle, Sensors, Nov. 2013, 13, 15221-15241*).*

The following paragraphs provide a summary of the Kalman filter and sets up the notation that will be used later. The Kalman filter estimates the value at successive epochs of a set of parameters (state vector), by using the information of the measurements that arrive sequentially. The measurements are processed in a sequential way, providing a new solution every time a new set of observations are received. The filter proceeds by updates of its main variables:

- $x_k$, the state vector, or vector of parameters defining the state at time or epoch $t_k$;
- $P_k$, the covariance matrix of the estimated parameters at time $t_k$;

It performs two different types of updates:

*A. Time update ("propagation"):*

The filter propagates the state vector and covariance matrix from epoch $k - 1$ to epoch $k$; their value after this update is usually noted $x_k^-$, $P_k^-$. The filter models the stochastic behaviour of the parameters between successive epochs. In the linear setting -which is enough for most purposes- the state and covariance propagation is given by:

$$x_k^- = F_k x_{k-1}$$

$$P_k^- = F_k P_{k-1} F_k^T + Q_k$$

where:

- $F_k$ is the transition matrix from time $t_{k-1}$ to $t_k$; and,
- $Q_k$ is the covariance matrix of the random process ("process noise") that drives the evolution of the parameters of the state vector.

In the hybrid filter, the propagation of the state and its covariance matrix is performed by a mechanization algorithm that processes the IMU data received. For most purposes, this update can be considered as equivalent to the linear update.

*B. Measurements update:*

The second update uses the information provided by the measurements to correct the state vector and covariance matrix, and gives their final value at epoch $t_k$, noted $x_k$ and $P_k$, respectively. The value of the measurements vector at epoch $k$ can be written as

$$z_k = h(x_k) + v_k$$

Function $h$ gives the dependence of the measurements on the parameters, and $v_k$ is the measurement noise, assumed to have a covariance matrix $R_k$. The estimation is based on the linearized expression:

$$z_k = H_k^T x_k + v_k$$

The matrix $H_k$ is usually known as the *design* matrix (also called observation matrix). The measurements update can be performed through the following steps:

- The measurements are reconstructed to obtain the residuals vector $y_k$;
- The new covariance matrix $P_k$ is computed as follows:

$$P_k = (H_k^T W_k H_k + (P_k^-)^{-1})^{-1}$$

where $W_k = R_k^{-1}$ is the weight matrix of the measurements at epoch $k$.
- The normal equations are solved:

$$\Delta x_k = P_k H_k^T W_k \cdot y_k$$

so that $x_k = x_k^- + \Delta x_k$.

There are other mechanizations of the sequential filter, which are mathematically equivalent, but the one described above is preferred to present the integrity algorithm. For reasons of clarity, in the rest of the document the ubiquitous subscript $k$ will be dropped. The design and weight matrix will be decomposed in the blocks corresponding to each measurement type $m$, noted as $H_m$, $W_m$ respectively, as shown in the following diagrams:

$$H = \begin{pmatrix} H_{m1} \\ \vdots \\ H_{mk} \end{pmatrix}, \qquad W = \begin{pmatrix} W_{m1} & \cdots & 0 \\ \vdots & \ddots & \vdots \\ 0 & \cdots & W_{mk} \end{pmatrix}$$

Finally, it is important to discuss the influence of the temporal correlations of the measurements in the performance of the filter. The Kalman filter as presented above is optimal under the assumption that the measurements taken at different epochs are uncorrelated. However, this is seldom the case. Usually, the measurement process is repeated at each epoch and give a constant number of measurements (say $w$), with an associated noise vector $v_k$ of size w. The noise is assumed to have zero mean: $E(v_k) = 0$. The temporal correlation matrices can be defined as $B(k, l) = E(v_k v_l^T)$. The noise process is called stationary if $B(k, l) = B(k + s, l + s) = B(k - l)$. In the case of the white noise, the measurements at different epochs are not correlated, and then $B(k, l) = 0$ if $k \neq l$. In most cases the correlation matrix $B$ is diagonal, and each component of the vector $v_k$ can be analysed as a one-dimensional process. In one dimension we can define the autocorrelation function:

$$R(k, l) = \frac{B(k, l)}{B(k, k)^{1/2} B(l, l)^{1/2}}$$

If the process is stationary, the autocorrelation function is simpler and may be written as:

$$R(k, l) = \rho(k - l)$$

The function $\rho$ verifies the following inequalities:

$$0 \leq \rho(h) \leq 1$$

Then, the diagonal correlation matrix $B$ of a stationary process will be:

$$B(h) = \begin{pmatrix} \rho_1(h) & \cdots & 0 \\ \vdots & \ddots & \vdots \\ 0 & \cdots & \rho_w(h) \end{pmatrix}, \quad 0 \leq \rho_i(h) \leq 1$$

In the simplest case, a Gauss-Markov process, the autocorrelation function is given by:

$$\rho(h) = \phi^{|h|}, \qquad 0 \leq \phi \leq 1$$

For values of $\rho(h)$ significantly above 0, the filter performance is clearly degraded. So, it is very important to take into account the effect of correlations to compute bounds for the Kalman solution errors. In the method of the present invention, when for a measurement type $m$ the temporal correlations are considered, we will denote by $\rho_m$ the associated correlation matrix $B(1)$ of the measurement noise. This matrix will be given as an input to the method. Its values will be derived either from the knowledge of the measurement device characteristics or by any independent method that estimates them from the evolution of the measurements and their residuals.

As far as the present invention is concerned, the actual form of the non-linear GNSS observation equation or how the design matrix $H$ is derived from it, are not relevant topics, so the present document does not go deeper into such details (which, on the other hand, are of standard use in GNSS Kalman filter navigation and can be learned from many GNSS literature sources as, for instance, "Global Positioning System: Theory & Applications", Bradford W. Parkinson & James J. Spilker (editors), 1996).

*Description of the Invention*

The present invention provides a robust and consistent method for autonomously computing Protection Levels for a Kalman filter, based on simple hypotheses.

The method and device of the present invention do not rely on restrictive hypothesis on the behaviour of the measurements noise. It uses the residuals of the measurements of a given type, at a given epoch, to estimate the magnitude of their typical error.

A first aspect of the invention refers to a method for computing a bound $B$ up to a given confidence level $1 - \alpha$, of an error in a Kalman state vector estimation KSV which is an estimation of a state vector TSV (comprising a set of parameters) of a physical system as provided by a Kalman filter. The Kalman filter receives from the physical system multiple raw measurements $RM_m$ of different types, $m$ denoting each measurement type. The Kalman filter also provides:

- the number $n_{OBS,m}$ of raw measurements of type $m$;
- a design matrix $H_m$ for measurements of type $m$;
- a weight matrix $W_m$ used for measurements of type $m$;
- the vector of residuals $y_m$ of the measurements of type $m$, computed after the Kalman measurements update;
- a covariance matrix $P$ of the error made in the estimation KSV of the state vector;
- a transition matrix $F$ defining the evolution of the state vector.

In general, in order to estimate the parameters which form the state vector TSV, the Kalman state vector KSV contains additional parameters that are not in the state vector TSV; the bound applies only to the subset of parameters of KSV that are an estimation of TSV.

According to the invention, the method computes a t-distribution $T_m$ for each measurement type $m$, each t-distribution $T_m$ being defined by a scalar $N_m$ and a matrix $R_m$. It is obtained using a fitting method which adjusts $T_m$ to the sum of two t-distributions $T_{m1}$ and $T_{m2}$, the first t-distribution $T_{m1}$ modelling the errors introduced by the measurements in the current epoch and the second t- distribution $T_{m2}$ modelling the errors introduced by all measurements of previous epochs:

- the first t-distribution $T_{m1}$ corresponds to the projection in the state vector estimation KSV of the errors of the measurements of type $m$ in the current epoch, and is defined by a scalar $N_{m1}$ and a matrix $R_{m1}$ which are computed as follows: $N_{m1} = n_m + \beta N'_{m1}$ and $R_{m1} = (r_m^2 K_m W_m^{-1} K_m^T)$, where:

  - $n_m = n_{OBS.m} - tr(H_m K_m)$;
  - $r_m^2 = (y_m^T W_m y_m + \beta N'_{m1} (r'_m)^2)/N_{m1}$;
  - $N'_{m1}$    $r'_m$ are the values of $N_{m1}, r_m$, respectively, at the previous epoch $t_{k-1}$;
  - $\beta$ is a tuning parameter between 0 and 1, given as input to the method;
  - $K_m = PH_m^T W_m$;

- the second t-distribution $T_{m2}$ corresponds to the projection in the state vector estimation KSV of the errors of the measurements of type $m$ accumulated in previous epochs, and is defined by a scalar $N_{m2}$ and a matrix $R_{m2}$ which are computed by propagating the previous value of $T_m$ as follows: $N_{m2} = N'_m$ and $R_{m2} = (UR'_m U^T)$, where

  - $N'_m$,    $R'_m$ are the values of $N_m$, $R'_m$, respectively, at the previous epoch $t_{k-1}$;
  -
$$- U = (1 - \sum_m K_m H_m) \cdot F.$$

The error bound $B$ is then computed by:

i) computing a partial error bound $B_m$ for each t-distribution $T_m$ and adding the partial error bounds; or,
ii) applying the previous step to a reduced number of t-distributions obtained from the t-distributions $T_m$ by applying the fitting method successively to pairs of the t-distributions $T_m$.

That is, the present invention provides a method for computing an error bound (or Protection Level), up to a given confidence level $1 - \alpha$, to a subset of the parameters estimated by a Kalman filter.

According to the invention, the method decomposes the errors of the Kalman solution as a sum of the errors due to each of the measurement types used in the filter. In addition, the contribution of each type of measurement is in turn the sum of error terms from all the epochs processed. Then, the computation of the error bound is the result of three main operations:

- Compute a probability distribution of the measurement errors for each epoch and measurement type.
- Sum the previous distributions to obtain a global distribution that models the Kalman solution error, preferably taking into account the temporal correlations of the measurements as indicated below.
- Compute the error bounds for a given confidence level from the resulting distribution.

In the particular case of GNSS navigation, these parameters are preferably the position coordinates, or their horizontal or vertical components; or the horizontal and/or the vertical components of the velocity error.

The measurements may proceed from different sources: in the present case they can be GNSS pseudorange, Doppler or carrier-phase observations. In the case of a hybrid filter, IMU sensors readings are also processed, although they are applied in the propagation phase, and not in the Kalman update.

In order to take into account the temporal correlations of the measurements, the method further comprises:

- computing a mutual correlation matrix $D_m$ of the two t-distributions $T_{m1}$ and $T_{m2}$ as follows:

$$D_m = r_m K_m W_m^{-1/2} A_m U^T$$

where $A_m$ is a matrix that has a row for each measurement of type m and a column for each parameter of the state vector estimation KSV;
- subtracting a correction term computed as $tr(\rho_m H_m K_m)$ to the value of $n_m$; and,
- computing a new value of $A_m$ for the next epoch $t_{k+1}$, as the sum of $r_m \cdot \rho_m W_m^{-1/2} K_m^T$ and $\rho_m A'_m U^T$, where $\rho_m$ is a diagonal matrix whose entries are correlation factors $0 \le (\rho_m)_{ii} < 1$, and $A'_m$ is the old value of $A_m$.

The fitting method which adjusts the sum of two t-distributions $T_{m1}$ and $T_{m2}$ to the t-distribution $T_m$ preferably comprises calculating the defining parameters $N_m$ and $R_m$ of $T_m$ as follows:

-

$$R_m = R_{m1} + R_{m2};$$

and,
- $N_m$ by numerically solving the following equation:

$$N_m^{(d-2)/2} t_m^{2-d} (1 + t_m^{-2})^{-(N_m+d-2)/2}$$

$$= N_{m1}^{(d-2)/2} t_{m1}^{N_{m1}} exp \left\{ \frac{(N_{m1} + N_{m2})N_{m1}}{2N_{m2}} t_{m2}^2 \right\}$$

$$+ N_{m2}^{(d-2)/2} t_{m2}^{N_{m2}} exp \left\{ \frac{(N_{m1} + N_{m2})N_{m2}}{2N_{m1}} t_{m1}^2 \right\}$$

where:

- $d$ is the size or the number of parameters of the state vector TSV,
-

$$t_{m1} = [N_{m1} tr(R_{m1})/tr(S)]^{1/2}$$

-

$$t_{m2} = [N_{m2} tr(R_{m2})/tr(S)]^{1/2}$$

$$t_m = [N_m tr(R_m)/tr(S)]^{1/2}$$

$$S = N_{m1} R_{m1} + N_{m2} R_{m2} + Z$$

$$Z = \omega \cdot (N_{m1} R_{m1} + N_{m2} R_{m2}),$$

$\omega$ being a fine tuning parameter that depends on the confidence level 1 - $\alpha$ of interest ($\omega$ in the range 1-3 for small confidence levels, $\omega \sim 10$ for high confidence levels).

In another preferred embodiment of the invention, the fitting method which adjusts the sum of two t-distributions $T_{m1}$ and $T_{m2}$ to the t-distribution $T_m$ comprises calculating the defining parameters $N_m$ and $R_m$ of $T_m$ as follows:

$$R_m = R_{m1} + R_{m2};$$

and,

$$N_m = tr(R_m) \cdot [\omega(a_1 + a_2) + 4a_1 a_2] \cdot \left[\omega\left(\frac{a_1}{N_{m1}} + \frac{a_2}{N_{m2}}\right) + 4\frac{a_1 a_2}{N_{m1}+N_{m2}}\right]^{-1}$$

where $a_1$ = $tr(R_{m1})$, $a_2$ = $tr(R_{m2})$ and $\omega$ is a fine tuning parameter that depends on the confidence 1 - $\alpha$ of interest; again $\omega$ in the range 1-3 for small confidence levels, $\omega \sim 10$ for high confidence levels.

In either case the parameter $R_m$ is preferably calculated as follows: $R_m = R_{m1} + R_{m2} + D_m + D_m^T$.

According to a preferred embodiment, a partial error bound $B_m$ for a t-distribution $T_m$ can be computed as follows:

$$B_m(\alpha) = k(\alpha, N_m) \cdot b_m$$

where:

- $k(\alpha, N_m)$ is computed by numerically solving the equation

$$\frac{2}{B(d/2, N_m/2)} \int_k^\infty \frac{y^{d-1}}{(1 + y^2)^{(N_m+d)/2}} dy = 1 - \alpha$$

- $d$ is the size of the state vector TSV,
- 
$$b_m = [\tau_m/d]^{1/2} \ ,$$

- $\tau_m$ is the trace of $R_m$ taken over the $d$ parameters of the state vector TSV,
- $(N_m, R_m)$ are the defining parameters of the t- distribution $T_m$.

If the size of the state vector TSV is 2, $k(\alpha, N)$ can be computed as $N_m^{1/2} \cdot \left(\alpha^{-2/N} - 1\right)^{1/2}$.

In a particular embodiment the matrices $R_m$ can be simplified to numbers and obtained as:

- $R_{m1} = r_m^2 \cdot [tr(K_m W_m^{-1} K_m^T)/d]$

- $R_{m2} = \lambda^2 \cdot R'_m$, where $R'_m$ is the value of $R_m$ at the previous epoch $t_{k-1}$.

$$\lambda = tr(U)/d,$$

- the traces being taken over the $d$ parameters of the state vector TSV; and,
  if temporal correlations are considered the variables $D_m$ and $A_m$ are numbers, and

- $D_m$ is computed as $R_{m1}^{1/2} \cdot \lambda \cdot A_m$,

- $A_m$ is updated as the sum of $\rho_m R_{m1}^{1/2}$ and $\rho_m A'_m \lambda$, where $\rho_m$ is a correlation factor $0 \le \rho_m < 1$ given as input and $A'_m$ is the old value of $A_m$.

In a particular embodiment, if the Kalman filter also provides estimates of the time derivatives of the state vector TSV, the matrices $R_m$ are 2x2 matrices obtained from the 2x2 matrices $R_{m1}$, $R_{m2}$:

- $R_{m1} = \begin{pmatrix} \mu_{m,A} & \mu_{m,C} \\ \mu_{m,C} & \mu_{m,B} \end{pmatrix}$

- $\mu_{m,A} = r_m^2 tr_{PP}(K_m W_m^{-1} K_m^T)/d$

- $\mu_{m,C} = r_m^2 tr_{PV}(K_m W_m^{-1} K_m^T)/d$

- $\mu_{m,B} = r_m^2 tr_{VV}(K_m W_m^{-1} K_m^T)/d$

- $tr_{PP}$ is the trace over the block of the matrix whose rows and columns correspond to parameters of TSV, $tr_{VV}$ is the trace over the block of the matrix whose rows and columns correspond to time derivatives of parameters of TSV and $tr_{PV}$ is the trace over the block of the matrix whose rows correspond to parameters of TSV and whose columns correspond to time derivatives of parameters of TSV;

- $R_{m2} = \overline{U} R'_m \overline{U}^T$, where $R'_m$ is the value of $R_m$ at the previous epoch $t_{k-1}$; - $\overline{U} = \frac{1}{d}\begin{pmatrix} tr_{PP}(U) & tr_{PV}(U) \\ tr_{VP}(U) & tr_{VV}(U) \end{pmatrix}$; and,

  if temporal correlations are considered, the matrix $D_m$ is a 2x2 matrix computed as $\begin{pmatrix} \mu_{m,A}^{1/2} \\ \mu_{m,B}^{1/2} \end{pmatrix} \cdot (u_m \quad v_m) \cdot \overline{U}^T$, where

- the parameters $(u_m \, v_m)$ are computed as the sum of $\rho_m \begin{pmatrix} \mu_{m,A}^{1/2} & \mu_{m,B}^{1/2} \end{pmatrix}$ and $\rho_m (u'_m \quad v'_m) \cdot \overline{U}^T$, where $\rho_m$ is a correlation factor $0 \le \rho_m < 1$ given as input and $(u'_m \quad v'_m)$ is the old value of $(u_m \, v_m)$.

In a particular embodiment an additional measurement type is included to consider the Kalman propagation errors, whose t-distribution $T_p$ is computed using the following inputs:

- a design matrix $H_p$ which is the identity;
- a weight matrix $W_p$ computed as $(Q^-)^{-1} \cdot \delta Q_1 \cdot (Q^-)^{-1}$, where $Q^-$ is the propagation to epoch $t_k$ of the previous covariance matrix $Q'$ and $\delta Q_1$ is $Q^- - FQ'F^T$;
- the number $n_{OBS,p}$ computed as $tr(Q^- W_p)$;
- a vector of residuals $y_p = (x_k - Fx_{k-1})$, where $x_k$, $x_{k-1}$ contain the values of the estimated parameters at epochs $t_k$ and $t_{k-1}$, respectively.

In a particular embodiment of the invention, the method has the capability to add information about some of the error sources provided by an external interface, in a unified manner. An additional t-distribution $T_e$ is included, which refers to errors in another set of parameters $q$ not estimated in the Kalman filter but affecting the measurements. The t-distribution $T_e$ is computed using the following inputs:

- a weight matrix $W_e$ provided through the external interface;
- a design matrix $H_e$ computed as $W_e^{-1} \sum_m J_m^T W_m H_m$, where the sum runs over the measurement types $m$, and $J_m$ is the design matrix of the set of $q$ parameters considered for measurements of type $m$;
- the number $n_e$ provided through the external interface ;
- the value of $y_e^2$ as given by $n_e$.

Another aspect of the invention relates to a device for computing a bound $B$ up to a given confidence level 1 - $\alpha$, of an error in the estimation KSV of a state vector TSV of a physical system as provided by a Kalman filter, the Kalman filter receiving from the physical system multiple raw measurements $RM_m$ of different types, $m$ denoting each measurement type, the Kalman filter also providing:

- the number $n_{OBS,m}$ of raw measurements of type $m$;
- a design matrix $H_m$ for measurements of type $m$;
- a weight matrix $W_m$ used for measurements of type $m$;
- the vector of residuals $y_m$ of the measurements of type $m$, computed after the Kalman measurements update;
- a covariance matrix $P$ of the error made in the estimation KSV of the state vector;
- a transition matrix $F$ defining the evolution of the state vector; and

wherein the device further comprises:

- a fitting module configured for adjusting a t-distribution $T_m$ to the sum of two t-distributions $T_{m1}$ and $T_{m2}$ for each measurement type $m$, each t-distribution $T_m$ being defined by a scalar $N_m$ and a matrix $R_m$;
- a first calculation module LOCAL for receiving the outputs from the Kalman filter, and for computing the first t-distribution $T_{m1}$ which corresponds to the projection in the state vector estimation KSV of the errors of the measurements of type $m$ in the current epoch, the first t-distribution $T_{m1}$ being defined by a scalar $N_{m1}$ and a matrix $R_{m1}$ which are computed as follows: $N_{m1} = n_m + \beta N'_{m1}$ and $R_{m1} = (r_m^2 K_m W_m^{-1} K_m^T)$, where:

  - $$- n_m = n_{OBS,m} - tr(H_m K_m);$$

  - $r_m^2 = (y_m^T W_m y_m + \beta N'_{m1}(r'_m)^2)/N_{m1}$;
  - $N'_{m1}$, $r'_m$ are the values of $N_{m1}$, $r_m$, respectively, at the previous epoch $t_{k-1}$;
  - $\beta$ is a tuning paramete between 0 and 1, given as input to the method;
  - $K_m = PH_m^T W_m$;

- a second calculation module PROPAG for receiving the outputs from the Kalman filter, and for computing the second t-distribution $T_{m2}$ which corresponds to the projection in the state vector estimation KSV of the errors of the measurements of type $m$ accumulated in previous epochs, the second t-distribution $T_{m2}$ being defined by a scalar $N_{m2}$ and a matrix $R_{m2}$ which are computed by propagating the previous value of $T_m$ as follows: $N_{m2} = N'_m$ and $R_{m2} = (UR'_m U^T)$, where

  - $N'_m$, $R'_m$ are the values of $N_m$, $R'_m$, respectively, at the previous epoch $t_{k-1}$;
  - $$- U = (1 - \sum_m K_m H_m) \cdot F;$$

- a third calculation module configured for computing the error bound $B$ by:

    i) computing a partial error bound $B_m$ for each t-distribution $T_m$ and adding the partial error bounds; or,
    ii) applying the previous step to a reduced number of t-distributions obtained from the t-distributions $T_m$ by applying the fitting method successively to pairs of t-distributions $T_m$.

The device is preferably a GNSS receiver.
The different aspects and embodiments of the invention defined in the foregoing can be combined with one another, as long as they are compatible with each other.
Additional advantages and features of the invention will become apparent from the detail description that follows and will be particularly pointed out in the appended claims.

*Detailed description of the preferred embodiments*

The present invention provides a method for computing an error bound (or Protection Level), up to a given

confidence level 1 - $\alpha$, to a subset of the parameters estimated by a Kalman filter. In the particular case of GNSS navigation, these parameters are the position coordinates, or their horizontal or vertical components. As defined above, an error bound for a confidence level 1 - $\alpha$ is a positive number $B$ such that:

$$P(|\delta| > B) < \alpha$$

where $|\delta|$ is the norm of the error vector of the parameters under consideration.

The method is coupled to the Kalman filter in the following way. After each measurement update, the filter provides a new parameter solution (e.g. new position and velocity, plus new values of the auxiliary parameters, in the GNSS navigation case). Then, the method computes a new bound for the subset of parameters that are being monitored. As input, it requires the current state of the Kalman filter. More specifically, the input consists of:

- the internal matrices of the Kalman method: design, weights, covariance and transition matrices,
- the quadratic sum of the residuals vector for each measurement type.

Thus, the method is autonomous, as the error bound can be computed without any external information about the statistical nature of the measurement errors.

The next paragraphs describe a preferred way of the method of the present invention, which provides a bound, up to a confidence level 1 - $\alpha$, of the error in the estimation of the state vector of a physical system, TSV, by means of a Kalman filter with an estimation state vector KSV. Note that the KSV must contain the parameters of TSV, but can also contain additional parameters. For instance, in GNSS navigation the state vector TSV is usually the position of a GNSS receiver, while the Kalman filter that computes the navigation solution also includes the receiver velocity and the receiver clock bias and drift in the estimation state vector KSV.

The method of the present invention stores, for each measurement type $m$, the following variables:

- a scalar $N_m$ and a square matrix $R_m$ having the same size as the Kalman state vector KSV, which defines a t-distribution for the accumulated error distribution due to that measurement type;
- a matrix $A_m$ that is used to compute the effects of the temporal correlation of measurements. The columns of this matrix correspond to the parameters of the Kalman state vector KSV; each row is associated to a measurement that is repeated in successive epochs and shows temporal correlations. For instance, in the case of the GNSS navigation each row is associated to the different satellites being tracked by the receiver.

These variables are initialized as $N_m = 1$, $R_m = 0$ and $A_m = 0$.

The method has two main parts, which are repeated at each epoch:

- update the value of the aforementioned variables;
- use them to compute a new error bound for the Kalman solution.

At each epoch, the Kalman filter processes a new set of measurements, of different types. As a result, a new solution of the estimated parameters is produced. Then, the method receives the following inputs from the Kalman filter:

- the design matrix $H_m$ of each measurements of type $m$ at epoch $t_k$;
- the weight matrix $W_m$ used at epoch $t_k$ for each measurement type $m$;
- the covariance matrix $P$, updated with the measurements of epoch $t_k$;
- the deterministic transition matrix $F$ from epoch $t_{k-1}$ to epoch $t_k$;
- the number $n_{0BS,m}$ of measurements of type $m$ at epoch $t_k$; and
- the quadratic sum $y_m^2$ of the residuals vector $y_m$ of each measurement type $m$ at epoch $t_k$, computed after the Kalman measurements update.

The first operation of the method at epoch $t_k$ is the update, for each measurement type, of the variables $N_m$, $R_m$ and $A_m$. An important element of the mechanism is the measurement correlation matrix $\rho_m$. It is diagonal, and its entries $0 \leq (\rho_m)_{ii} < 1$ are the correlation factors of the different measurements. It is an input to the method, which either is given by configuration or is estimated by an independent method. In many cases, it makes sense to use a single value $\Phi_m$ that applies to all the measurements, so that $\rho_m = \Phi_m \cdot Id$.

The method proceeds in several steps:

EP 3 009 860 B1

1. Compute the value of the local variables $N_{m1}$, $R_{m1}$ that model the errors of the contribution of the measurements of type m at epoch $t_k$, by the following rules:

$$K_m = PH_m^T W_m$$

$$n_m = n_{OBS,m} - tr((H_m K_m) - tr(\rho_m H_m K_m),$$

$$N_{m1} = n_m + \beta N'_{m1},$$

$$r_m^2 = \frac{(y_m^T W_m y_m + \beta N'_{m1}(r'_m)^2)}{N_{m1}}$$

$$R_{m1} = r_m^2 K_m W_m^{-1} K_m^T$$

The variables $N'_{m1}$, $r'_m$ contain the values of $N_{m1}$ and $r_m$ computed at the previous epoch. The tuning parameter $0 \le \beta < 1$ is given as input to the algorithm. A value $\beta = 0$ means that the characterization of the measurements noise obtained in the previous epoch is not used in the present one. When $\beta$ is above 0, the previous statistics are used to improve the characterization of the error noise at the present epoch.

2. Compute the value of the local variables $N_{m2}$, $R_{m2}$ that model the errors of the contribution of the previous measurements of type m, by the following rules:

$$N_{m2} = N_m$$

$$U = \left(1 - \sum_m K_m H_m\right) \cdot F$$

$$R_{m2} = UR_m U^T$$

Note that the matrix $U$ can also be written as $(1 - KH) \cdot F$ in terms of the total design and weight matrices $H$ and $W$, with $K = H^T W$.

3. Compute the correlation matrix $D_m$ as

$$D_m = r_m K_m W_m^{-1/2} A_m U^T$$

4. Compute the updated value of $R_m$ by the simple rule:

$$R_m = R_{m1} + R_{m2} + D_m + D_m^T$$

5. Compute the auxiliary variables $t_{m1}$, $t_{m2}$, by using the intermediate matrices $Z$, $S$:

$$Z = \omega \cdot (N_{m1} R_{m1} + N_{m2} R_{m2})$$

$$S = N_{m1} R_{m1} + N_{m2} R_{m2} + Z$$

12

$$t_{m1} = [N_{m1} tr(R_{m1})/tr(S)]^{1/2}$$

$$t_{m2} = [N_{m2} tr(R_{m2})/tr(S)]^{1/2}$$

The parameter $\omega > 1$ tunes the update of $N_m$, depending on the confidence level $1 - \alpha$. For bigger confidence levels, it should be higher.

6. Compute the updated value of $N_m$ by numerically solving the following equation:

$$N_m^{(d-2)/2} t_m^{2-d} (1 + t_m^{-2})^{-(N_m+d-2)/2}$$

$$= N_{m1}^{(d-2)/2} t_{m1}^{N_{m1}} exp \left\{ \frac{(N_{m1} + N_{m1})N_{m1}}{2N_{m2}} t_{m2}^2 \right\}$$

$$+ N_{m2}^{(d-2)/2} t_{m2}^{N_{m2}} exp \left\{ \frac{(N_{m1} + N_{m2})N_{m2}}{2N_{m1}} t_{m1}^2 \right\}$$

where the expression $t_m$ represents the value $[N_m tr(R_m)/tr(S)]^{1/2}$ and d is the size of TSV, or the number of its parameters.

7. Compute the updated value of $A_m$ by adding the following two matrices:

$$r_m \cdot \rho_m W_m^{-1/2} K_m^T$$

$$\rho_m A_m U^T$$

The second operation of the method at epoch $t_k$ is the computation of the bound $B(\alpha)$ for this epoch. It also consists of several steps:

　　1. For each measurement type $m$, compute the trace $tr_m$ of the matrix $R_m$ over the parameters of TSV.
　　2. For each measurement type $m$, compute the factor $b_m$ as

$$b_m = [tr_m/d]^{1/2}$$

As mentioned above, d is the size of TSV.

　　3. For each measurement type $m$, compute the factor $k(\alpha, N_m)$ by numerically solving the equation

$$\frac{2}{B(d/2, N_m/2)} \int_k^\infty \frac{y^{d-1}}{(1 + y^2)^{(N_m+d)/2}} dy = 1 - \alpha$$

　　4. For each measurement type $m$, compute bound $B_m(\alpha)$ as

$$B_m(\alpha) = k(\alpha, N_m) \cdot b_m$$

　　5. Finally, compute the total bound $B(\alpha)$ as the sum of the partial ones:

$$B(\alpha) = \sum_m B_m(\alpha)$$

Once the general method has been presented, the next paragraphs describe a reduced implementation for the GNSS navigation with pseudorange and Doppler measurements. In this case, the matrices $R_m$ are 2x2, even if the Kalman state vector is much bigger. The two components correspond to the position and velocity errors, respectively.

The goal is to provide bounds for the horizontal position error (that is, $d = 2$). In this specific case, the method stores, for each measurement type $m$ (pseudorange and Doppler), the following variables:

- a scalar $N_m$ and a 2x2 matrix $R_m$;
- a pair of parameters $(u_m\ v_m)$ that are used to compute the effects of the temporal correlation of measurements.

These variables are initialized as $N_m = 1$, $R_m = 0$, $u_m = 0$ and $v_m = 0$.

- The method has two main parts, which are repeated at each epoch:
- update the value of the aforementioned variables;
- use them to compute a new error bound for the Kalman solution.

At each epoch, the Kalman filter processes a new set of pseudorange and Doppler measurements. As a result, a new solution of the estimated parameters is produced, and thus a new position. The method receives the same inputs from the Kalman filter as mentioned above, for pseudorange and Doppler measurements..

The first operation of the method at epoch $t_k$ is the update, for each measurement type, of the variables $N_m$, $R_m$ and $(u_m\ v_m)$. The correlation matrix is here replaced by a number $0 \le \rho_m < 1$, which is an input, as above. The method proceeds in several steps:

1. Compute the value of the local variables $N_{m1}$, $R_{m1}$ that model the errors of the contribution of the measurements of type m at epoch $t_k$, by the following rules:

$$K_m = Q H_m^T W_m$$

$$n_m = n_{OBS,m} - (1 + \rho_m) \cdot tr((H_m K_m),$$

$$N_{m1} = n_m + \beta N'_{m1},$$

$$r_m^2 = \frac{(y_m^T W_m y_m + \beta N'_{m1} (r'_m)^2)}{N_{m1}}$$

$$\mu_{m,A} = r_m^2 tr_{PP}(K_m W_m^{-1} K_m^T)/2$$

$$\mu_{m,C} = r_m^2 tr_{PV}(K_m W_m^{-1} K_m^T)/2$$

$$\mu_{m,B} = r_m^2 tr_{VV}(K_m W_m^{-1} K_m^T)/2$$

$$R_{m1} = \begin{pmatrix} \mu_{m,A} & \mu_{m,C} \\ \mu_{m,C} & \mu_{m,B} \end{pmatrix}$$

where $tr_{PP}$ is the trace over the block of the matrix whose rows and columns correspond to horizontal position parameters, $tr_{VV}$ is the trace over the block of the matrix whose rows and columns correspond to horizontal velocity parameters and $tr_{PV}$ is the trace over the block of the matrix whose rows correspond to horizontal position parameters and whose columns correspond to horizontal velocity parameters.

2. Compute the value of the local variables $N_{m2}$, $R_{m2}$ that model the errors of the contribution of the previous measurements of type m, by the following rules:

$$N_{m2} = N_m$$

$$U = \left(1 - \sum_m K_m H_m\right) \cdot F$$

$$\bar{U} = \frac{1}{2}\begin{pmatrix} tr_{PP}(U) & tr_{PV}(U) \\ tr_{VP}(U) & tr_{VV}(U) \end{pmatrix}$$

$$R_{m2} = \bar{U} R_m \bar{U}^T$$

3. Compute the correlation matrix $D_m$ as

$$D_m = \begin{pmatrix} \mu_{m,A}^{1/2} \\ \mu_{m,B}^{1/2} \end{pmatrix} \cdot (u_m \quad v_m) \cdot \bar{U}^{\,T}$$

4. Compute the updated value of $R_m$ by the simple rule:

$$R_m = R_{m1} + R_{m2} + D_m + D_m^T$$

5. Compute the auxiliary variables $t_{m1}$, $t_{m2}$, by using the intermediate matrices $Z$, $S$:

$$Z = \omega \cdot (N_{m1} R_{m1} + N_{m2} R_{m2})$$

$$S = N_{m1} R_{m1} + N_{m2} R_{m2} + Z$$

$$t_{m1} = [N_{m1} tr(R_{m1})/tr(S)]^{1/2}$$

$$t_{m2} = [N_{m2} tr(R_{m2})/tr(S)]^{1/2}$$

6. Compute the updated value of $N_m$ by numerically solving the following equation:

$$(1 + t_m^{-2})^{-\frac{N_m}{2}} =$$

$$t_{m1}^{N_{m1}} exp\left\{\frac{(N_{m1} + N_{m2})N_{m1}}{2N_{m2}} t_{m2}^2\right\} + t_{m2}^{N_{m2}} exp\left\{\frac{(N_{m1} + N_{m2})N_{m2}}{2N_{m1}} t_{m1}^2\right\}$$

where the expression $t_m$ represents the value $[N_m tr(Rm)/tr(S)]^{1/2}$.

7. Compute the updated value of $(u_m \ v_m)$ by adding the following two matrices:

$$\rho_m \left(\mu_{m,A}^{1/2} \quad \mu_{m,B}^{1/2}\right)$$

$$\rho_m \cdot (u_m \quad v_m) \cdot \bar{U}^{\,T}$$

The second operation of the method at epoch $t_k$ is the computation of the bound $B(\alpha)$ for this epoch. It also consists of several steps:

1. For each measurement type $m$, compute the factor $k(\alpha, N_m)$ as

$$k(\alpha, N_m) = N_m^{1/2} \cdot \left(\alpha^{-2/N} - 1\right)^{1/2}$$

2. For each measurement type $m$, compute bound $B_m(\alpha)$ as

$$B_m(\alpha) = k(\alpha, N_m) \cdot (R_m)_{11}^{1/2}$$

3. Finally, compute the total bound $B(\alpha)$ as the sum of the partial ones:

$$B(\alpha) = \sum_m B_m(\alpha)$$

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

**Claims**

1. Method for computing a bound $B$ up to a given confidence level $1 - \alpha$, of an error in a state vector estimation, KSV, of a state vector, TSV, of a physical system as provided by a Kalman filter, the Kalman filter receiving from the physical system multiple raw measurements $RM_m$ of different types, $m$ denoting each measurement type, the Kalman filter also providing:

   - the number $n_{OBS,m}$ of raw measurements of type $m$;
   - a design matrix $H_m$ for measurements of type $m$;
   - a weight matrix $W_m$ used for measurements of type $m$;
   - the vector of residuals $y_m$ of the measurements of type $m$, computed after the Kalman measurements update;
   - a covariance matrix $P$ of the error made in the estimation KSV of the state vector; and
   - a transition matrix $F$ defining the evolution of the state vector;

   wherein the method comprises the steps of:

   - computing a t-distribution $T_m$ for each measurement type $m$, each t-distribution $T_m$ being defined by a scalar $N_m$ and a matrix $R_m$, which t-distribution is obtained using a fitting method which adjusts the t-distribution $T_m$ to the sum of two t-distributions $T_{m1}$ and $T_{m2}$,

       - the first t-distribution $T_{m1}$ corresponding to the projection on the state vector estimation, KSV, of the errors of the measurements of type $m$ in the current epoch, and being defined by a scalar $N_{m1}$ and a matrix $R_{m1}$ that are computed as follows: $N_{m1} = n_m + \beta N'_{m1}$ and $R_{m1} = (r_m^2 K_m W_m^{-1} K_m^T)$, where:

       -

       $$- \; n_m = n_{OBS,m} - tr(H_m K_m);$$

       - $r_m^2 = (y_m^T W_m y_m + \beta N'_{m1} (r'_m)^2)/N_{m1}$;
       - $N'_{m1}$, $r'_m$ are the values of $N_{m1}$, $r_m$, respectively, at the previous epoch $t_{k-1}$;
       - $\beta$ is a tuning parameter between 0 and 1, given as input to the method;
       - $K_m = P H_m^T W_m$;

- the second t-distribution $T_{m2}$ corresponding to the projection on the state vector estimation, KSV, of the errors of the measurements of type $m$ accumulated in previous epochs, and being defined by a scalar $N_{m2}$ and a matrix $R_{m2}$ that are computed by propagating the previous value of $T_m$ as follows: $N_{m2}=N'_m$ and $R_{m2} = (UR'_m U^T)$, where

- $N'_m$, $R'_m$ are the values of $N_m$, $R'_m$, respectively, at the previous epoch $t_{k-1}$;

-

$$U = (1 - \textstyle\sum_m K_m H_m) \cdot F;$$

- computing the error bound $B$ by:

i) computing a partial error bound $B_m$ for each t-distribution $T_m$ and adding the partial error bounds; or,
ii) applying the previous step to a reduced number of t-distributions obtained from the t-distributions $T_m$ by applying the fitting method successively to pairs of t-distributions $T_m$.

2. Method according to claim 1, wherein the method further comprises:

- computing a mutual correlation matrix $D_m$ of the two t-distributions $T_{m1}$ and $T_{m2}$ as follows:

$$D_m = r_m K_m W_m^{-1/2} A_m U^T$$

where $A_m$ is a matrix that has a row for each measurement of type m and a column for each parameter of the state vector estimation, KSV;
- subtracting a correction term computed as $tr(\rho_m H_m K_m)$ to the value of $n_m$; and,
- computing a new value of $A_m$ for the next epoch $t_{k+1}$, as the sum of $r_m \cdot \rho_m W_m^{-1/2} K_m^T$ and $\rho_m A'_m U^T$, where $\rho_m$ is a diagonal matrix whose entries are correlation factors $0 \le (\rho_m)_{ii} < 1$, and $A'_m$ is the old value of $A_m$.

3. Method according to any of claims 1-2, wherein the fitting method which adjusts the sum of two t-distributions $T_{m1}$ and $T_{m2}$ to the t-distribution $T_m$ comprises calculating the defining parameters $N_m$ and $R_m$ of $T_m$ as follows:

-

$$R_m = R_{m1} + R_{m2};$$

and,
- $N_m$ by numerically solving the following equation:

$$N_m^{(d-2)/2} t_m^{2-d} (1 + t_m^{-2})^{-(N_m+d-2)/2}$$

$$= N_{m1}^{(d-2)/2} t_{m1}^{N_{m1}} exp \left\{ \frac{(N_{m1} + N_{m2})N_{m1}}{2N_{m2}} t_{m2}^2 \right\}$$

$$+ N_{m2}^{(d-2)/2} t_{m2}^{N_{m2}} exp \left\{ \frac{(N_{m1} + N_{m2})N_{m2}}{2N_{m1}} t_{m1}^2 \right\}$$

where:

- $d$ is the size of the state vector, TSV,
-

$$t_{m1} = [N_{m1} tr(R_{m1})/tr(S)]^{1/2}$$

$$t_{m2} = [N_{m2} tr(R_{m2})/tr(S)]^{1/2}$$

$$t_m = [N_m tr(R_m)/tr(S)]^{1/2}$$

$$S = N_{m1} R_{m1} + N_{m2} R_{m2} + Z$$

$$Z = \omega \cdot (N_{m1} R_{m1} + N_{m2} R_{m2}),$$

$\omega$ being a fine tuning parameter that depends on the confidence level 1 - $\alpha$.

4. Method according to any of claims 1-2, wherein the fitting method which adjusts the sum of two t-distributions $T_{m1}$ and $T_{m2}$ to the t-distribution $T_m$ comprises calculating the defining parameters $N_m$ and $R_m$ of $T_m$ as follows:

$$R_m = R_{m1} + R_{m2};$$

and,

$$N_m = tr(R_m) \cdot [\omega \cdot (a_1 + a_2) + 4 a_1 a_2] \cdot \left[\omega \cdot \left(\frac{a_1}{N_{m1}} + \frac{a_2}{N_{m2}}\right) + 4 \frac{a_1 a_2}{N_{m1} + N_{m2}}\right]^{-1}$$ where $a_1$ = $tr(R_{m1})$, $a_2$ = $tr(R_{m2})$ and $\omega$ is a fine tuning parameter that depends on the confidence level 1 - $\alpha$.

5. Method according to any of claims 3 or 4 when dependent on claim 2, wherein the parameter $R_m$ is calculated as follows: $R_m = R_{m1} + R_{m2} + D_m + D_m^T.$

6. Method according to any of claims 1-5, wherein a partial error bound $B_m$ for a t-distribution $T_m$ is computed as follows:

$$B_m(\alpha) = k(\alpha, N_m) \cdot b_m$$

where:

- $k(\alpha, N_m)$ is computed by numerically solving the equation

$$\frac{2}{B(d/2, N_m/2)} \int_k^\infty \frac{y^{d-1}}{(1 + y^2)^{(N_m + d)/2}} dy = 1 - \alpha$$

- $d$ is the size or the number of parameters of the state vector TSV,
-

$$b_m = [\tau_m/d]^{1/2} \ ,$$

- $\tau_m$ is the trace of $R_m$ taken over the $d$ parameters of the state vector, TSV,
- $(N_m, R_m)$ being the defining parameters of the t- distribution $T_m$.

7. Method according to claim 6, wherein if the size of the state vector, TSV, is 2, $k(\alpha, N)$ is computed as $N_m^{1/2} \cdot \left(\alpha^{-2/N} - 1\right)^{1/2}$.

8. Method according to any previous claim, wherein the matrices $R_m$ can be simplified to numbers and obtained as:

- $R_{m1} = r_m^2 \cdot [tr(K_m W_m^{-1} K_m^T)/d]$
- $R_{m2} = \lambda^2 \cdot R'_m$, where $R'_m$ is the value of $R_m$ at the previous epoch $t_{k-1}$.
- $\lambda = tr(U)/d$, the traces being taken over the $d$ parameters of the state vector, TSV; and, if temporal correlations are considered the variables $D_m$ and $A_m$ are numbers, and
- $D_m$ is computed as $R_{m1}^{1/2} \cdot \lambda \cdot A_m$,
- $A_m$ is updated as the sum of $\rho_m R_{m1}^{1/2}$ and $\rho_m A'_m \lambda$, where $\rho_m$ is a correlation factor $0 \le \rho_m < 1$ given as input and $A'_m$ is the old value of $A_m$.

9. Method according to any previous claim, wherein if the Kalman filter also provides estimates of the time derivatives of the state vector TSV, the matrices $R_m$ are 2x2 matrices obtained from the 2x2 matrices $R_{m1}$, $R_{m2}$:

- $R_{m1} = \begin{pmatrix} \mu_{m,A} & \mu_{m,C} \\ \mu_{m,C} & \mu_{m,B} \end{pmatrix}$
- $\mu_{m,A} = r_m^2 tr_{PP}(K_m W_m^{-1} K_m^T)/d$
- $\mu_{m,C} = r_m^2 tr_{PV}(K_m W_m^{-1} K_m^T)/d$
- $\mu_{m,B} = r_m^2 tr_{VV}(K_m W_m^{-1} K_m^T)/d$

- $tr_{PP}$ is the trace over the block of the matrix whose rows and columns correspond to parameters of TSV, $tr_{VV}$ is the trace over the block of the matrix whose rows and columns correspond to time derivatives of parameters of TSV and $tr_{PV}$ is the trace over the block of the matrix whose rows correspond to parameters of TSV and whose columns correspond to time derivatives of parameters of TSV.
- $R_{m2} = \overline{U} R'_m \overline{U}^T$, where $R'_m$ is the value of $R_m$ at the previous epoch $t_{k-1}$; -

- $\overline{U} = \frac{1}{d}\begin{pmatrix} tr_{PP}(U) & tr_{PV}(U) \\ tr_{VP}(U) & tr_{VV}(U) \end{pmatrix}$; and if temporal correlations are considered, the matrix $D_m$ is a 2x2 matrix com-

puted as $\begin{pmatrix} \mu_{m,A}^{1/2} \\ \mu_{m,B}^{1/2} \end{pmatrix} \cdot (u_m \ v_m) \cdot \overline{U}^T$, where the parameters $(u_m \ v_m)$ are computed as the sum of $\rho_m \begin{pmatrix} \mu_{m,A}^{1/2} & \mu_{m,B}^{1/2} \end{pmatrix}$ and $\rho_m (u'_m \ v'_m) \cdot \overline{U}^T$, where $\rho_m$ is a correlation factor $0 \le \rho_m < 1$ given as input and $(u'_m \ v'_m)$ is the old value of $(u_m \ v_m)$.

10. Method according to any previous claim, wherein an additional measurement type is included to consider the Kalman filter propagation errors, whose t-distribution $T_p$ is computed using the following inputs:

- a design matrix $H_p$ which is the identity;
- a weight matrix $W_p$ computed as $(Q^-)^{-1} \cdot \delta Q_1 \cdot (Q^-)^{-1}$, where $Q^-$ is the propagation to epoch $t_k$ of the previous covariance matrix $Q'$ and $\delta Q_1$ is $Q^- - FQ'F^T$;
- the number $n_{OBS,p}$ computed as $tr(Q^- W_p)$;
- a vector of residuals $y_p = (x_k - Fx_{k-1})$, where $x_k, x_{k-1}$ contain the values of the estimated parameters at epochs $t_k$ and $t_{k-1}$, respectively.

11. Method according to any previous claim, wherein an additional measurement type is included to consider errors in another set of parameters $q$ not estimated in the Kalman filter but affecting the measurements, whose t-distribution $T_e$ is computed using the following inputs:

- a weight matrix $W_e$ provided by an external interface;
- a design matrix $H_e$ computed as $W_e^{-1} \sum_m J_m^T W_m H_m$, where the sum runs over the measurement types m, and $J_m$ is the design matrix of the set of $q$ parameters considered for measurements of type m;
- the number $n_e$ provided by an external interface;
- the value of $y_e^2$ as given by $n_e$.

12. Method according to any previous claim, where the Kalman filter is used to estimate a GNSS navigation solution, the parameters to be bounded being the horizontal components of the position error, and wherein the measurement types $m$ are two or more of pseudorange measurements, Doppler measurements, carrier-phase measurements.

13. Method according to any of claims 11-12, wherein the components to be bounded are the vertical components of the position error and/or the horizontal and/or the vertical components of the velocity error.

14. Device for computing a bound $B$ up to a given confidence level 1 - $\alpha$, of an error in the estimation, KSV, of a state vector, TSV, of a physical system as provided by a Kalman filter, the Kalman filter receiving from the physical system multiple raw measurements $RM_m$ of different types, $m$ denoting each measurement type, the Kalman filter also providing:

- the number $n_{OBS,m}$ of raw measurements of type $m$;
- a design matrix $H_m$ for measurements of type $m$;
- a weight matrix $W_m$ used for measurements of type $m$;
- the vector of residuals $y_m$ of the measurements of type $m$, computed after the Kalman measurements update;
- a covariance matrix $P$ of the error made in the estimation KSV of the state vector;
- a transition matrix $F$ defining the evolution of the state vector; and

wherein the device further comprises:

- a fitting module configured for adjusting a t-distribution $T_m$ to the sum of two t-distributions $T_{m1}$ and $T_{m2}$ for each measurement type $m$, each t-distribution $T_m$ being defined by a scalar $N_m$ and a matrix $R_m$;
- a first calculation module LOCAL for receiving the outputs from the Kalman filter, and for computing the first t-distribution $T_{m1}$ which corresponds to the projection in the state vector estimation, KSV, of the errors of the measurements of type $m$ in the current epoch, the first t-distribution $T_{m1}$ being defined by a scalar $N_{m1}$ and a matrix $R_{m1}$ which are computed as follows: $N_{m1} = n_m + \beta N'_{m1}$ and $R_{m1}=(r_m^2 K_m W_m^{-1} K_m^T)$, where:

-

$$- n_m = n_{OBS,m} - tr(H_m K_m);$$

- $r_m^2 = (y_m^T W_m y_m + \beta N'_{m1} (r'_m)^2)/N_{m1}$;
- $N'_{m1}, r'_m$ are the values of $N_{m1}, r_m$, respectively, at the previous epoch $t_{k-1}$;
- $\beta$ is a tuning parameter between 0 and 1, given as input to the method;
- $K_m = P H_m^T W_m$;

- a second calculation module PROPAG for receiving the outputs from the Kalman filter, and for computing the second t-distribution $T_{m2}$ which corresponds to the projection in the state vector estimation, KSV, of the errors of the measurements of type m accumulated in previous epochs, the second t-distribution $T_{m2}$ being defined by a scalar $N_{m2}$ and a matrix $R_{m2}$ which are computed by propagating the previous value of $T_m$ as follows:

$N_{m2}=N'_m$ and $R_{m2} = (U R'_m U^T)$, where

- $N'_m$, $R'_m$ are the values of $N_m$, $R'_m$, respectively, at the previous epoch $t_{k-1}$;

-

$$- U = (1 - \textstyle\sum_m K_m H_m) \cdot F;$$

- a third calculation module configured for computing the error bound *B* by:

i) computing a partial error bound $B_m$ for each t-distribution $T_m$ and adding the partial error bounds; or,
ii) applying the previous step to a reduced number of t-distributions obtained from the t-distributions $T_m$ by applying the fitting method successively to pairs of t-distributions $T_m$.

**15.** Device according to claim 14, wherein the device is a GNSS receiver.


**Patentansprüche**

**1.** Verfahren zum Berechnen einer Grenze *B* bis zu einem gegebenen Konfidenzniveau 1 - $\alpha$ eines Fehlers in einer Zustandsvektorschätzung KSV eines Zustandsvektors TSV eines physikalischen Systems, wie durch einem Kalman-Filter bereitgestellt, wobei der Kalman-Filter von dem physikalischen System Mehrfach-Rohmessungen $RM_m$ von verschiedenen Typen erhält, *m* bezeichnet jede Messart, der Kalman-Filter bietet auch:

- die Anzahl $n_{OBS,m}$ an Rohmessungen vom Typ *m*;
- eine Designmatrix $H_m$ für Messungen vom Typ *m*;
- eine für Messungen vom Typ *m* verwendete Gewichtsmatrix $W_m$;
- den Vektor von Resten $y_m$ der Messungen vom Typ *m*, berechnet nach der Aktualisierung der Kalman-Messungen;
- eine Kovarianzmatrix *P* des Fehlers bei der Schätzung KSV des Zustandsvektors; und
- eine Übergangsmatrix *F,* definierend die Entwicklung des Zustandsvektors;

wobei das Verfahren die Schritte umfasst:

- Berechnen einer t-Verteilung $T_m$ für jede Messart *m*, wobei jede t-Verteilung $T_m$ durch ein Skalar $N_m$ und eine Matrix $R_m$ definiert ist, wobei die t-Verteilung durch die Verwendung eines Anpassungsverfahrens erhalten wird, das die t-Verteilung $T_m$ auf die Summe von zwei t-Verteilungen $T_{m1}$ und $T_{m2}$ einstellt,

- die erste t-Verteilung $T_{m1}$ entsprechend zu der Projektion auf die Zustandsvektorschätzung KSV der Fehler der Messungen vom Typ *m* in der aktuellen Zeitspanne und durch ein Skalar $N_{m1}$ und eine Matrix $R_{m1}$ definiert, die wie folgt berechnet werden: $N_{m1} = n_m + \beta N'_{m1}$ und $R_{m1} = (r_m^2 K_m W_m^{-1} K_m^T)$, wobei:

-

$$- \quad n_m = n_{OBS,m} - tr(H_m K_m);$$

- $r_m^2 = (y_m^T W_m y_m + \beta N'_{m1} (r'_m)^2)/N_{m1}$;

- $N'_{m1}$, $r'_m$ jeweils die Werte von $N_{m1}$, $r_m$ in der vorherigen Zeitspanne $t_{k-1}$ sind;

- $\beta$ ein Abstimmparameter zwischen 0 und 1 ist, angegeben als Eingabe in das Verfahren;

- $K_m = P H_m^T W_m$;

- die zweite t-Verteilung $T_{m2}$ entsprechend zu der Projektion auf die Zustandsvektorschätzung KSV der Fehler der Messungen vom Typ *m*, die in vorherigen Zeitspannen gesammelt wurden und durch ein Skalar $N_{m2}$ und eine Matrix $R_{m2}$ definiert sind, die durch Fortpflanzung des vorherigen Wertes von $T_m$ wie folgt

berechnet werden: $N_{m2} = N'_m$ und $R_{m2} = (U R'_m U^T)$, wobei

- $N'_m$, $R'_m$ jeweils die Werte von $N_m$, $R'_m$ in der vorherigen Zeitspanne $t_{k-1}$ sind;

-

$$U = (1 - \sum_m K_m H_m) \cdot F;$$

- Berechnen der Fehlergrenze *B* durch:

i) Berechnen einer Teilfehlergrenze $B_m$ für jede t-Verteilung $T_m$ und Addieren der Teilfehlergrenzen; oder
ii) Anwenden des vorherigen Schrittes auf eine reduzierte Anzahl von t-Verteilungen, erhalten aus den t-Verteilungen $T_m$ durch aufeinanderfolgendes Anwenden des Anpassungsverfahrens auf Paare von t-Verteilungen $T_m$.

2. Verfahren nach Anspruch 1, wobei das Verfahren ferner umfasst:

- Berechnen einer gegenseitigen Korrelationsmatrix $D_m$ der beiden t-Verteilungen $T_{m1}$ und $T_{m2}$ wie folgt:

$$D_m = r_m K_m W_m^{-1/2} A_m U^T$$

wobei $A_m$ eine Matrix ist, die eine Zeile für jede Messung vom Typ *m* und eine Spalte für jeden Parameter der Zustandsvektorschätzung KSV aufweist;
- Subtrahieren eines Korrekturterms, berechnet als $tr(\rho_m H_m K_m)$ zu dem Wert von $n_m$; und

- Berechnen eines neuen Wertes von $A_m$ für die nächste Zeitspanne $t_{k+1}$ als die Summe von $r_m \cdot \rho_m W_m^{-1/2} K_m^T$

und $\rho_m A'_m U^T$, wobei $\rho_m$ eine diagonale Matrix ist, deren Einträge Korrelationsfaktoren $0 \leq (\rho_m)_{ii} < 1$ sind und $A'_m$ der alte Wert von $A_m$ ist.

3. Verfahren nach einem der Ansprüche 1-2, wobei das Anpassungsverfahren, das die Summe von zwei t-Verteilungen $T_{m1}$ und $T_{m2}$ an die t-Verteilung $T_m$ anpasst, Berechnen der definierenden Parameter $N_m$ und $R_m$ von $T_m$ wie folgt umfasst:

-

$$R_m = R_{m1} + R_{m2};$$

und
- $N_m$ durch numerisches Lösen der folgenden Gleichung:

$$N_m^{(d-2)/2} t_m^{2-d} (1 + t_m^{-2})^{-(N_m + d - 2)/2}$$
$$= N_{m1}^{(d-2)/2} t_{m1}^{N_{m1}} exp \left\{ \frac{(N_{m1} + N_{m2}) N_{m1}}{2 N_{m2}} t_{m2}^2 \right\}$$
$$+ N_{m2}^{(d-2)/2} t_{m2}^{N_{m2}} exp \left\{ \frac{(N_{m1} + N_{m2}) N_{m2}}{2 N_{m1}} t_{m1}^2 \right\}$$

wobei:

- *d* die Größe des Zustandsvektors TSV ist
-

$$t_{m1} = [N_{m1}\,tr(R_{m1})/tr(S)]^{1/2}$$

$$t_{m2} = [N_{m2}\,tr(R_{m2})/tr(S)]^{1/2}$$

$$t_m = [N_m\,tr(R_m)/tr(S)]^{1/2}$$

$$S = N_{m1}R_{m1} + N_{m2}R_{m2} + Z$$

$$Z = \omega \cdot (N_{m1}R_{m1} + N_{m2}R_{m2}),\ \ \omega$$

$\omega$ ein Feinabstimmungsparameter ist, der vom Konfidenzniveau 1 - $\alpha$ abhängt.

4. Verfahren nach einem der Ansprüche 1-2, wobei das Anpassungsverfahren, das die Summe von zwei t-Verteilungen $T_{m1}$ und $T_{m2}$ an die t-Verteilung $T_m$ anpasst, Berechnen der definierenden Parameter $N_m$ und $R_m$ von $T_m$ wie folgt umfasst:

$$R_m = R_{m1} + R_{m2},$$

und

$$N_m = tr(R_m) \cdot [\omega \cdot (a_1 + a_2) + 4a_1a_2] \cdot \left[\omega \cdot \left(\frac{a_1}{N_{m1}} + \frac{a_2}{N_{m2}}\right) + 4\frac{a_1a_2}{N_{m1}+N_{m2}}\right]^{-1}$$ wobei $\alpha_1 = tr(R_{m1})$, $\alpha_2 = tr(R_{m2})$

und $\omega$ ein Feinabstimmungsparameter ist, der vom Konfidenzniveau 1 - $\alpha$ abhängt.

5. Verfahren nach einem der Ansprüche 3 oder 4, wenn abhängig von Anspruch 2, wobei der Parameter $R_m$ wie folgt berechnet wird: $R_m = R_{m1} + R_{m2} + D_m + D_m^T$.

6. Verfahren nach einem der Ansprüche 1 - 5, wobei eine Teilfehlergrenze $B_m$ für eine t-Verteilung $T_m$ wie folgt berechnet wird:

$$B_m(\alpha) = k(\alpha, N_m) \cdot b_m$$

wobei:

- $k(\alpha, N_m)$ durch numerisches Lösen der Gleichung $\dfrac{2}{B(d/2, N_m/2)} \displaystyle\int_k^\infty \dfrac{y^{d-1}}{(1+y^2)^{(N_m+d)/2}}\, dy = 1 - \alpha$ berechnet wird
- d die Größe oder die Anzahl von Parametern des Zustandsvektors TSV ist,
-

$$b_m = [\tau_m/d]^{1/2},$$

- $T_m$ die Kurve von $R_m$, die über die $d$-Parameter des Zustandsvektors TSV übernommen wurde, ist,
- $(N_m, R_m)$ die definierenden Parameter der t-Verteilung $Tm$ sind.

**7.** Verfahren nach Anspruch 6, wobei, wenn die Größe des Zustandsvektors TSV 2 ist, $k(\alpha, N)$ als $N_m^{1/2} \cdot \left(\alpha^{-2/N} - 1\right)^{1/2}$ berechnet wird.

**8.** Verfahren nach einem vorherigen Anspruch, wobei die Matrizen $R_m$ zu Zahlen vereinfacht und erhalten werden können als:

$\quad$ - $R_{m1} = r_m^2 \cdot [tr(K_m W_m^{-1} K_m^T)/d]$

$\quad$ - $R_{m2} = \lambda^2 \cdot R_m'$, where $R_m'$, wobei R'm der Wert von Rm im vorherigen Zeitabschnitt $t_{k-1}$ ist.

$\quad$ -

$$\lambda = tr(U)/d,$$

die Kurven werden über die $d$-Parameter des Zustandsvektors TSV übernommen; und, wenn zeitliche Korrelationen betrachtet werden, sind die Variablen $D_m$ und $A_m$ Zahlen, und

- $D_m$ wird berechnet als $R_{m1}^{1/2} \cdot \lambda \cdot A_m$,

- $A_m$ wird als die Summe von $\rho_m R_{m1}^{1/2}$ und $\rho_m A_m' \lambda$ aktualisiert, wobei $\rho_m$ ein Korrelationsfaktor $0 \le \rho_m < 1$ ist, der als Eingabe angegeben ist und A'm der alte Wert von Am ist.

**9.** Verfahren nach einem vorherigen Anspruch, wobei, wenn der Kalman-Filter auch Schätzungen der Zeitableitungen des Zustandsvektors TSV liefert, die Matrizen $R_m$ 2x2 Matrizen sind, erhalten aus den 2x2 Matrizen $R_{m1}$, $R_{m2}$;

$\quad$ - $R_{m1} = \begin{pmatrix} \mu_{m,A} & \mu_{m,C} \\ \mu_{m,C} & \mu_{m,B} \end{pmatrix}$

$\quad$ - $\mu_{m,A} = r_m^2 tr_{PP}(K_m W_m^{-1} K_m^T)/d$

$\quad$ - $\mu_{m,C} = r_m^2 tr_{PV}(K_m W_m^{-1} K_m^T)/d$

$\quad$ - $\mu_{m,B} = r_m^2 tr_{VV}(K_m W_m^{-1} K_m^T)/d$

- $tr_{PP}$ ist die Kurve über dem Block der Matrix, deren Zeilen und Spalten den Parametern von TSV entsprechen, $tr_{VV}$ ist die Kurve über dem Block der Matrix, deren Zeilen und Spalten den Zeitableitungen der Parameter von TSV entsprechen und $tr_{PV}$ ist die Kurve über dem Block der Matrix, deren Zeilen den Parametern von TSV entsprechen und deren Spalten den Zeitableitungen der Parameter von TSV entsprechen

$\quad$ - $R_{m2} = \bar{U} R_m' \bar{U}^T$, wobei $R_m'$ der Wert von $R_m$ in der vor in der vorherigen Zeitspanne $t_{k-1}$ ist;

$\quad$ - $\bar{U} = \frac{1}{d} \begin{pmatrix} tr_{PP}(U) & tr_{PV}(U) \\ tr_{VP}(U) & tr_{VV}(U) \end{pmatrix}$; und

wenn zeitliche Korrelationen berücksichtigt werden, ist die Matrix $D_m$ eine 2x2 Matrix, die berechnet wird als

$\begin{pmatrix} \mu_{m,A}^{1/2} \\ \mu_{m,B}^{1/2} \end{pmatrix} \cdot (u_m \quad v_m) \cdot \bar{U}^T$, wobei die Parameter $(u_m \quad v_m)$ als die Summe von $\rho_m \begin{pmatrix} \mu_{m,A}^{1/2} & \mu_{m,B}^{1/2} \end{pmatrix}$ und

$\rho_m (u_m' \quad v_m') \cdot \bar{U}^T$ berechnet werden, wobei $\rho_m$ ein Korrelationsfaktor $0 \le \rho_m < 1$ ist, angegeben als Eingabe und $(u_m' \quad v_m')$ der alte Wert von $(u_m v_m)$ ist.

**10.** Verfahren nach einem vorherigen Anspruch, wobei eine zusätzliche Messart enthalten ist, um den Kalman-Filter-Fortpflanzungsfehler zu berücksichtigen, deren t-Verteilung $T_p$ unter Verwendung der folgenden Eingaben berechnet wird:

- eine Designmatrix $H_p$, die die Identität ist;
- eine Gewichtsmatrix $W_p$, berechnet als $(Q^-)^{-1} \cdot \delta Q_1 \cdot (Q^-)^{-1}$, wobei $Q^-$ die Fortpflanzung zur Zeitspanne $t_k$ der vorherigen Kovarianzmatrix $Q'$ und $\delta_{Q1}\, Q^- - FQ'F^T$ ist;
- die Anzahl $n_{OBS,p}$ berechnet als $tr(Q^-W_p)$;
- ein Vektor von Resten $y_p = (x_k{-}Fx_{k-1})$ , wobei $x_k$, $x_{k-1}$ die Werte der geschätzen Parameter in den jeweiligen Zeitspannen $t_k$ und $t_{k-1}$ enthält.

11. Verfahren nach einem vorherigen Anspruch, wobei eine zusätzliche Messart enthalten ist, um Fehler in einem anderen Satz von Parametern $q$ zu berücksichtigen, die nicht im Kalman-Filter geschätzt werden, sondern die Messungen beeinflussen, deren t-Verteilung $T_e$ unter Verwendung der folgenden Eingaben berechnet wird:

- eine Gewichtsmatrix $W_e$, bereitgestellt von einer externen Schnittstelle;

- eine Designmatrix $H_e$, berechnet als $W_e^{-1} \sum_m J_m^T W_m H_m$, wobei die Summe über die Messarten $m$ läuft und $J_m$ die Designmatrix des Satzes von $q$-Parametern ist, der für Messungen vom Typ $m$ berücksichtigt wird;
- die Nummer $n_e$, bereitgestellt von einer externen Schnittstelle;
- der Wert von $y_e^2$ wie durch $n_e$ angegeben.

12. Verfahren nach einem vorherigen Anspruch, wobei der Kalman-Filter zum Schätzen einer GNSS-Navigationslösung verwendet wird, wobei die zu begrenzenden Parameter die horizontalen Komponenten des Positionsfehlers sind und wobei die Messarten $m$ zwei oder mehr aus Pseudorange-Messungen, Dopplermessungen, Trägerphasenmessungen sind.

13. Verfahren nach einem der Ansprüche 11-12, wobei die zu begrenzenden Komponenten die vertikalen Komponenten des Positionsfehlers und/oder die horizontalen und/oder die vertikalen Komponenten des Geschwindigkeitsfehlers sind.

14. Vorrichtung zum Berechnen einer Grenze $B$ bis zu einem gegebenen Konfidenzniveau $1 - \alpha$ eines Fehlers in der Schätzung KSV eines Zustandsvektors TSV eines physikalischen Systems, wie durch einen Kalman-Filter zur Verfügung gestellt, wobei der Kalman-Filter von dem physikalischen System die Mehrfach-Rohmessungen $RM_m$ verschiedener Typen erhält, wobei $m$ jede Messart bezeichnet, wobei der Kalman-Filter ebenfalls zur Verfügung stellt:

- die Anzahl $n_{OBS,m}$ an Rohmessungen vom Typ $m$;
- eine Designmatrix $H_m$ für Messungen vom Typ $m$;
- eine für Messungen vom Typ $m$ verwendete Gewichtsmatrix $W_m$;
- den Vektor von Resten $y_m$ der Messungen vom Typ $m$, berechnet nach der Aktualisierung der Kalman-Messungen;
- eine Kovarianzmatrix $P$ des Fehlers in der Schätzung KSV des Zustandsvektors; und
- eine Übergangsmatrix $F$, definierend die Entwicklung des Zustandsvektors; und wobei die Vorrichtung ferner umfasst:
- ein Anpassungsmodul, konfiguriert zum Einstellen einer t-Verteilung $T_m$ auf die Summe von zwei t-Verteilungen $T_{m1}$ und $T_{m2}$ für jede Messart $m$, wobei jede t-Verteilung $T_m$ durch ein Skalar $N_m$ und eine Matrix $R_m$ definiert ist;
- ein erstes Berechnungsmodul LOCAL zum Erhalten der Ausgänge von dem Kalman-Filter und zum Berechnen der ersten t-Verteilung $T_{m1}$, die der Projektion in der Zustandsvektorschätzung KSV der Fehler der Messungen vom Typ $m$ in der aktuellen Zeitspanne entspricht, die erste t-Verteilung $T_{m1}$ ist durch ein Skalar $N_{m1}$ und eine Matrix $R_{m1}$ definiert, die wie folgt berechnet werden:

$$N_{m1} = n_m + \beta N'_{m1} \text{ and } R_{m1} = (r_m^2 K_m W_m^{-1} K_m^T),$$

wobei:

-

$$n_m = n_{OBS,m} - tr(H_m K_m);$$

$$r_m^2 = (y_m^T W_m y_m + \beta N_{m1}' (r_m')^2)/N_{m1};$$

- $N_{m1}'$, $r_m'$ jeweils die Werte von $N_{m1}$, $r_m$ in der vorherigen Zeitspanne $t_{k-1}$ sind;
- $\beta$ ein Abstimmparameter zwischen 0 und 1 ist, angegeben als Eingabe in das Verfahren;

$$K_m = PH_m^T W_m;$$

- ein zweites Berechnungsmodul PROPAG zum Erhalten der Ausgänge von dem Kalman-Filter und zum Berechnen der zweiten t-Verteilung $T_{m2}$, die der Projektion in der Zustandsvektorschätzung KSV der Fehler der Messungen vom Typ m, in vorherigen Zeitspannen angesammelt, entspricht, die zweite t-Verteilung $T_{m2}$ ist durch ein Skalar $N_{m2}$ und eine Matrix $R_{m2}$ definiert, die durch Fortpflanzung der vorherigen Werte von $Tm$ wie folgt berechnet werden: $N_{m2} = N_m'$ und $R_{m2} = (U R_m' U^T)$,

wobei

- $N_m'$, $R_m'$ jeweils die Werte von $N_m$, $R_m'$ in der vorherigen Zeitspanne $t_{k-1}$ sind;

-

$$U = (1 - \sum_m K_m H_m) \cdot F;$$

- ein drittes Berechnungsmodul konfiguriert zum Berechnen der Fehlergrenze $B$ durch:

    i) Berechnen einer Teilfehlergrenze $B_m$ für jede t-Verteilung $T_m$ und Addieren der Teilfehlergrenzen; oder
    ii) Anwenden des vorherigen Schrittes auf eine reduzierte Anzahl von t-Verteilungen, erhalten aus den t-Verteilungen $T_m$ durch aufeinanderfolgendes Anwenden des Anpassungsverfahrens auf Paare von t-Verteilungen $T_m$.

**15.** Vorrichtung nach Anspruch 14, wobei die Vorrichtung ein GNSS-Empfänger ist.

**Revendications**

**1.** Méthode de calcul d'une limite $B$ jusqu'à un niveau de confiance donné $1 - \alpha$, d'une erreur au sein d'une estimation de vecteur d'état, KSV, d'un vecteur d'état, TSV, d'un système physique fourni par un filtre de Kalman, le filtre de Kalman recevant, de la part du système physique, plusieurs mesures brutes $RM_m$ de différents types, $m$ indiquant chaque type de mesure, le filtre de Kalman fournissant également :

    - le nombre $n_{OBS,m}$ de mesures brutes de type $m$ ;
    - une matrice de conception $H_m$ pour les mesures de type $m$ ;
    - une matrice de pondération $W_m$ utilisée pour les mesures de type $m$ ;
    - le vecteur de résidus $y_m$ des mesures de type $m$, calculé après la mise à jour des mesures de Kalman ;
    - une matrice de covariance $P$ de l'erreur au sein de l'estimation KSV du vecteur d'état ; et
    - une matrice de transition $F$ qui définit l'évolution du vecteur d'état ;

dans laquelle la méthode comprend les étapes consistant à :

    - calculer une répartition t $T_m$ pour chaque type de mesure $m$, chaque répartition t $T_m$ étant définie par une échelle $N_m$ et une matrice $R_m$, ladite répartition étant obtenue à l'aide d'une méthode d'adaptation qui ajuste la répartition t $T_m$ selon la somme de deux répartitions t $T_{m1}$ et $T_{m2}$,

    - la première répartition t $T_{m1}$ correspondant à la projection, sur l'estimation de vecteur d'état, KSV, des erreurs des mesures de type $m$ au sein de la période actuelle, et étant définie par une échelle $N_{m1}$ et une matrice $R_{m1}$ qui sont calculées comme suit : $N_{m1} = n_m + \beta N_{m1}'$ et $R_{m1} = (r_m^2 K_m W_m^{-1} K_m^T)$ où :

-

$$- n_m = n_{OBS,m} - tr(H_m K_m);$$

$$- r_m^2 = (y_m^T W_m y_m + \beta N'_{m1}(r'_m)^2)/N_{m1};$$

- $N'_{m1}$, $r'_m$ sont les valeurs de $N_{ml}$, $r_m$, respectivement, au niveau de la période précédente $t_{k-1}$ ;

- $\beta$ est un paramètre de réglage compris entre 0 et 1, fourni comme un intrant de la méthode ;

$$- K_m = P H_m^T W_m;$$

- la seconde répartition t $T_{m2}$ correspondant à la projection, sur l'estimation de vecteur d'état, KSV, des erreurs des mesures de type $m$ accumulées au cours des périodes précédentes, et étant définie par une échelle $N_{m2}$ et une matrice $R_{m2}$ qui sont calculées en propageant la valeur précédente de $T_m$ comme suit :

$$N_{m2} = N'_m \quad \text{et} \quad R_{m2} = (U R'_m U^T), \quad \text{où}$$

- $N'_m$, $R'_m$ sont les valeurs de $N_m$, $R'_m$, respectivement, au niveau de la période précédente $t_{k-1}$ ;

-

$$U = (1 - \textstyle\sum_m K_m H_m) \cdot F$$

- calculer la limite d'erreur $B$ en :

i) calculant une limite d'erreur partielle $B_m$ pour chaque répartition t $T_m$ et en additionnant les limites d'erreur partielle, ou
ii) en appliquant l'étape précédente à un nombre réduit de répartitions t obtenues à partir des répartitions t $T_m$ en appliquant la méthode d'adaptation successivement à des paires de répartitions t $T_m$.

2. Méthode selon la revendication 1, dans laquelle la méthode comprend en outre :

- le calcul d'une matrice de corrélation mutuelle $D_m$ des deux répartitions t $T_{m1}$ et $T_{m2}$ comme suit :

$$D_m = r_m K_m W_m^{-1/2} A_m U^T$$

où $A_m$ est une matrice qui possède une rangée pour chaque de mesure de type m et une colonne pour chaque paramètre de l'estimation de vecteur d'état, KSV ;

- la soustraction d'un terme de correction calculé comme $tr(\rho_m H_m K_m)$ de la valeur de $n_m$ ; et
- le calcul d'une nouvelle valeur de $A_m$ pour la période suivante $t_{k+1}$, comme somme de

$$r_m \cdot \rho_m W_m^{-1/2} K_m^T \quad \text{et} \quad \rho_m A'_m U^T, \quad \text{où } \rho_m \text{ est une matrice diagonale dont les entrées sont des}$$

facteurs de corrélation $0 \leq (\rho_m)_{ii} < 1$ et $A'_m$ est l'ancienne valeur de $Am$.

3. Méthode selon l'une quelconque des revendications 1 à 2, dans laquelle la méthode d'adaptation qui ajuste la somme de deux répartitions t $T_{m1}$ et $T_{m2}$ selon la répartition t $T_m$ comprend le calcul des paramètres de définition $N_m$ et $R_m$ de $T_m$ comme suit :

-

$$- \quad R_m = R_{m1} + R_{m2} \quad \text{et}$$

- $N_m$ en résolvant numériquement l'équation suivante :

$$N_m^{(d-2)/2} t_m^{2-d} (1 + t_m^{-2})^{-(N_m+d-2)/2}$$

$$= N_{m1}^{(d-2)/2} t_{m1}^{N_{m1}} exp \left\{ \frac{(N_{m1} + N_{m2})N_{m1}}{2N_{m2}} t_{m2}^2 \right\}$$

$$+ N_{m2}^{(d-2)/2} t_{m2}^{N_{m2}} exp \left\{ \frac{(N_{m1} + N_{m2})N_{m2}}{2N_{m1}} t_{m1}^2 \right\}$$

où :

- $d$ est la taille du vecteur d'état, TSV,

-

$$t_{m1} = [N_{m1} tr(R_{m1})/tr(S)]^{1/2}$$

-

$$t_{m2} = [N_{m2} tr(R_{m2})/tr(S)]^{1/2}$$

-

$$t_m = [N_m tr(R_m)/tr(S)]^{1/2}$$

-

$$S = N_{m1}R_{m1} + N_{m2}R_{m2} + Z$$

-

$$Z = \omega \cdot (N_{m1}R_{m1} + N_{m2}R_{m2})_\omega$$

$\omega$ étant un paramètre de réglage précis qui dépend du niveau de confiance 1 - $\alpha$.

**4.** Méthode selon l'une quelconque des revendications 1 à 2, dans laquelle la méthode d'adaptation qui ajuste la somme de deux répartitions t $T_{m1}$ et $T_{m2}$ selon la répartition t $T_m$ comprend le calcul des paramètres de définition $N_m$ et $R_m$ de $T_m$ comme suit :

-

$$R_m = R_{m1} + R_{m2} \; ;$$

-

$$N_m = tr(R_m) \cdot [\omega \cdot (a_1 + a_2) + 4a_1 a_2] \cdot \left[ \omega \cdot \left( \frac{a_1}{N_{m1}} + \frac{a_2}{N_{m2}} \right) + 4 \frac{a_1 a_2}{N_{m1}+N_{m2}} \right]^{-1}$$ où $\alpha 1 =$ $tr(R_{m1})$, $\alpha 2 = tr(R_{m2})$ et $\omega$ est un paramètre de réglage précis qui dépend du niveau de confiance 1 - $\alpha$.

**5.** Méthode selon l'une quelconque des revendications 3 ou 4 lorsqu'elles dépendent de la revendication 2, dans laquelle le paramètre $R_m$ est calculé comme suit :

$$R_m = R_{m1} + R_{m2} + D_m + D_m^T.$$

**6.** Méthode selon l'une quelconque des revendications 1 à 5, dans laquelle une limite d'erreur partielle $B_m$ pour une répartition t $T_m$ est calculée comme suit :

$$B_m(\alpha) = k(\alpha, N_m) \cdot b_m$$

où :

- $k(\alpha, N_m)$ est calculé en résolvant numériquement l'équation

$$\frac{2}{B(d/2, N_m/2)} \int_k^\infty \frac{y^{d-1}}{(1+y^2)^{(N_m+d)/2}} dy = 1 - \alpha$$

- $d$ est la taille ou le nombre de paramètres du vecteur d'état TSV,
-

$$b_m = [\tau_m/d]^{1/2}$$

- $\tau_m$ est la trace de $R_m$ prise sur les paramètres $d$ du vecteur d'état, TSV,
- $(N_m, R_m)$ étant les paramètres de définition de la répartition t $T_m$.

**7.** Méthode selon la revendication 6, dans laquelle, si la taille du vecteur d'état, TSV, est 2, $k(\alpha,N)$ est calculé comme

$$N_m^{1/2} \cdot \left( \alpha^{-2/N} - 1 \right)^{1/2}$$

**8.** Méthode selon l'une quelconque des revendications précédentes, dans laquelle les matrices $R_m$ peuvent être simplifiées en nombres et obtenues comme :

- $R_{m1} = r_m^2 \cdot [tr(K_m W_m^{-1} K_m^T)/d]$
- $R_{m2} = \lambda^2 \cdot R_m'$ où $R_m'$ est la valeur de $R_m$ à la période précédente $t_{k-1}$,
-

$$\lambda = tr(U)/d,$$

les traces étant prises sur les paramètres $d$ du vecteur d'état, TSV ; et
si des corrélations temporelles sont considérées, les variables $D_m$ et $A_m$ sont des nombres, et

- $D_m$ est calculé comme $R_{m1}^{1/2} \cdot \lambda \cdot A_m$

- $A_m$ est mis à jour comme la somme de $\rho_m R_{m1}^{1/2}$ et $\rho_m A_m' \lambda$ où $\rho_m$ est un facteur de corrélation $0 \leq \rho_m$

< 1 donné comme une entrée et $A_m'$ est l'ancienne valeur de $A_m$.

**9.** Méthode selon l'une quelconque des revendications précédentes, dans laquelle, si le filtre de Kalman fournit également des estimations des dérivés de temps du vecteur d'état TSV, les matrices $R_m$ sont des matrices 2x2 obtenues à partir des matrices 2x2 $R_{m1}$, $R_{m2}$

$$R_{m1} = \begin{pmatrix} \mu_{m,A} & \mu_{m,C} \\ \mu_{m,C} & \mu_{m,B} \end{pmatrix}$$

$$\mu_{m,A} = r_m^2 tr_{PP}(K_m W_m^{-1} K_m^T)/d$$

$$\mu_{m,C} = r_m^2 tr_{PV}(K_m W_m^{-1} K_m^T)/d$$

$$\mu_{m,B} = r_m^2 tr_{VV}(K_m W_m^{-1} K_m^T)/d$$

- $tr_{PP}$ est la trace sur le bloc de la matrice dont les rangées et les colonnes correspondent aux paramètres de TSV, $tr_{VV}$ est la trace sur le bloc de la matrice dont les rangées et les colonnes correspondent aux dérivées de temps de TSV, et $tr_{PV}$ est la trace sur le bloc de la matrice dont les rangées correspondent aux paramètres de TSV et dont les colonnes correspondent aux dérivées de temps des paramètres de TSV,

$$R_{m2} = \overline{U} R'_m \overline{U}^T \text{ où } R'_m \text{ est la valeur de } R_m \text{ au niveau de la période précédente } t_{k-1} ;$$

$$\overline{U} = \frac{1}{d} \begin{pmatrix} tr_{PP}(U) & tr_{PV}(U) \\ tr_{VP}(U) & tr_{VV}(U) \end{pmatrix} \text{ et,}$$

si des corrélations temporelles sont considérées, la matrice $D_m$ est une matrice 2x2 calculée comme

$$\begin{pmatrix} \mu_{m,A}^{1/2} \\ \mu_{m,B}^{1/2} \end{pmatrix} (u_m \quad v_m) \cdot \overline{U}^T$$, où les paramètres $(u_m \quad v_m)$ sont calculés comme la somme de

$$\rho_m \begin{pmatrix} \mu_{m,A}^{1/2} & \mu_{m,B}^{1/2} \end{pmatrix} \text{ et } \rho_m (u'_m \quad v'_m) \cdot \overline{U}^T$$, où $\rho_m$ est un facteur de corrélation $0 \le \rho m < 1$

donné comme entrée et $\begin{pmatrix} u'_m & v'_m \end{pmatrix}$ est l'ancienne valeur de $(u_m \ v_m)$.

10. Méthode selon l'une quelconque des revendications précédentes, dans laquelle un type de mesure supplémentaire est inclus afin de considérer les erreurs de propagation du filtre de Kalman, dont la répartition t $T_p$ est calculée à l'aide des entrées suivantes :

- une matrice de conception $H_p$ qui est l'identité ;
- une matrice de pondération $W_p$ calculée comme $(Q^-)^{-1} \cdot \delta Q_1 \cdot (Q^-)^{-1}$ où $Q^-$ est la propagation jusqu'à la période $t_k$ de la matrice de covariance précédente $Q'$ et $\delta Q_1$ is $Q^- - FQ'F^T$
- le nombre $n_{OBS,p}$ calculé comme $tr(Q^- W_p)$
- un vecteur de résidus $y_p = (x_k - Fx_{k-1})$ où $x_k$, $x_{k-1}$ contient les valeurs des paramètres estimés aux périodes $t_k$ et $t_{k-1}$ respectivement.

11. Méthode selon l'une quelconque des revendications précédentes, dans laquelle un type de mesure supplémentaire est inclus afin de considérer les erreurs dans un autre groupe de paramètres $q$ non estimés dans le filtre de Kalman, mais qui affectent les mesures, dont la répartition t $T_e$ est calculée à l'aide des entrées suivantes :

- une matrice de pondération $W_e$ fournie par une interface externe ;
- une matrice de conception $H_e$ calculée comme $W_e^{-1} \sum_m J_m^T W_m H_m$, où la somme court sur les types de mesure m et $J_m$ est la matrice de conception du groupe de paramètres $q$ considérés pour les mesures de type m ;
- le nombre $n_e$ fourni par une interface externe ;
- la valeur de $y_e^2$ fournie par $n_e$

12. Méthode selon l'une quelconque des revendications précédentes, dans laquelle le filtre de Kalman est utilisé pour estimer une solution de navigation GNSS, les paramètres à délimiter étant les composantes horizontales de l'erreur de position, et dans laquelle les types de mesures $m$ sont deux ou plus de mesures à plage aléatoire, de mesures Doppler, ou de mesures à phase de porteuse.

13. Méthode selon l'une quelconque des revendications 11 à 12, dans laquelle les composantes à délimiter sont les composantes verticales de l'erreur de position et/ou les composantes horizontales et/ou verticales de l'erreur de vitesse.

14. Dispositif de calcul d'une limite $B$ jusqu'à un niveau de confiance donné 1-$\alpha$, d'une erreur au sein de l'estimation, KSV, d'un vecteur d'état, TSV, d'un système physique fourni par un filtre de Kalman, le filtre de KAlman recevant, de la part du système physique, plusieurs mesures brutes $RM_m$ de différents types, $m$ indiquant chaque type de mesure, le filtre de Kalman fournissant également :

- le nombre $n_{OBS,m}$ de mesures brutes de type $m$ ;
- une matrice de conception $H_m$ pour les mesures de type $m$ ;
- une matrice de pondération $W_m$ utilisée pour les mesures de type $m$ ;
- le vecteur de résidus des mesures de type $m$, calculé après la mise à jour des mesures de Kalman ;
- une matrice de covariance $P$ de l'erreur au sein de l'estimation KSV du vecteur d'état ; et
- une matrice de transition $F$ qui définit l'évolution du vecteur d'état ; et

dans lequel le dispositif comprend en outre :

- un module d'adaptation configuré pour ajuster une répartition t $T_m$ selon la somme de deux répartitions t $T_{m1}$ et $T_{m2}$ pour chaque type de mesure $m$, chaque répartition t $T_m$ étant définie par une échelle $N_m$ et une matrice $R_m$ ;
- un premier module de calcul LOCAL destiné à recevoir les sorties du filtre de Kalman, et à calculer la première répartition t $T_{m1}$ qui correspond à la projection, dans l'estimation de vecteur d'état, KSV, des erreurs des mesures de type $m$ pour la période actuelle, la première répartition t $T_{m1}$ étant définie par une échelle $N_{m1}$ et une matrice $R_{m1}$ qui sont calculées comme suit :

$$N_{m1} = n_m + \beta N'_{m1} \text{ and } R_{m1} = (r_m^2 K_m W_m^{-1} K_m^T)$$

où :

-

$$n_m = n_{OBS,m} - tr(H_m K_m);$$

- $r_m^2 = (y_m^T W_m y_m + \beta N'_{m1}(r'_m)^2)/N_{m1};$

- $N'_{m1}$, $r'_m$ sont les valeurs de $N_{m1}$, $r_m$ respectivement, pour la période précédente $t_{k-1}$

- $\beta$ est un paramètre de réglage entre 0 et 1, donné comme une entrée de la méthode ;

- $K_m = P H_m^T W_m$ ;

- un second module de calcul PROPAG destiné à recevoir les sorties du filtre de Kalman, et à calculer la seconde répartition t $T_{m2}$ qui correspond à la projection, dans l'estimation du vecteur d'état, KSV, des erreurs des mesures de type $m$ accumulées pour les périodes précédentes, la seconde répartition t $T_{m2}$ étant définie par une échelle $N_{m2}$ et une matrice $R_{m2}$ qui sont calculées en propageant la valeur précédente de $r_m$ comme suit :

$$N_{m2} = N'_m \text{ et } R_{m2} = (U R'_m U^T),$$

où

- $N'_m$, $R'_m$ sont les valeurs de $N_m$, $R'_m$, respectivement, pour la période précédente $t_{k-1}$

-

$$- U = (1 - \sum_m K_m H_m) \cdot F;$$

- un troisième module de calcul configuré pour calculer la limite d'erreur $B$ en :

i) calculant une limite d'erreur partielle $B_m$ pour chaque répartition t $T_m$ et en additionnant les limites d'erreur partielle ; ou
ii) en appliquant l'étape précédente à un nombre réduit de répartitions t obtenues à partir des répartitions t $T_m$ en appliquant la méthode d'adaptation successivement à des paires de répartitions t $T_m$.

**15.** Dispositif selon la revendication 14, dans lequel le dispositif est un récepteur GNSS.

$$- U = (1 - \sum_m K_m H_m) \cdot F;$$

**EP 3 009 860 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2113786 A

### Non-patent literature cited in the description

- A New Approach for Improving Reliability of Personal Navigation Devices under Harsh GNSS Signal Conditions. *Anup Dhital, Jared B. Bancroft and Gerard Lachapelle, Sensors,* November 2013, vol. 13, 15221-15241

- Global Positioning System: Theory & Applications. 1996